# EUROPEAN PATENT SPECIFICATION

(11) **EP 2 315 965 B1**
(45) Date of publication and mention of the grant of the patent: **14.03.2012**
(21) Application number: 09800141.5
(22) Date of filing: 21.07.2009
(51) Int. Cl.: F16D 65/06

(54) **BLOCK FOR BRAKE WITH RELIEF GROOVES**
KLOTZ FÜR BREMSE MIT FREISTICHEN
BLOC POUR FREIN AVEC RAINURES DE DÉLESTAGE

(30) Priority: 21.07.2008 IT MO20080199
(43) Date of publication of application: 04.05.2011
(73) Proprietor: Bellicoso, Laura, 80036 Palma Campania (NA) (IT)
(72) Inventor: Bellicoso, Laura, 80036 Palma Campania (NA) (IT)
(74) Representative: Iannone, Carlo Luigi
(86) International application number: PCT/IB2009/053150
(87) International publication number: WO 2010/010508

(56) References cited:
- FR-A- 1 034 322
- US-A- 1 434 464
- US-A- 3 140 762

## Description

The present invention relates to blocks for brakes with discharge grooves, in particular for railway rolling stock such as locomotives, carriages, etc.

Blocks for brakes are known from the prior art that are intended for interacting with the periphery of the wheels of the rolling stock to apply a braking force to the wheels. Known blocks for brakes have an arched shape that is complementary to the shape of the periphery of the wheel to ensure secure contact and contact over the entire surface of the block during the braking action.

The contact surface between the block and the periphery of the wheel is a smooth and continuous surface.

Originally, and for a long time, the blocks were made of cast iron, which had significant drawbacks, such as screeching and sparking during braking, significant wear to the contact surface of the wheel, smoke emission, polluting dusts and odours, great development of heat during braking. Recently, blocks for brakes made of synthetic, or organic, material have been proposed that enable the noise produced during braking to be reduced significantly, the risk of sparking to be eliminated and wear to the surface of the wheels in contact with the blocks to be reduced.

Nevertheless, there still remain significant drawbacks, such as, for example, the great quantity of heat produced during braking, the difficulty of disposing of the heat produced, with the consequent risk of overheating of both the blocks for brakes and the wheels, in the event of frequent braking, the creation of dust, phenomena of flaking of the material of the blocks, braking force distributed unevenly along the periphery of the wheels and on the blocks of the brakes.

US 3 140 762 discloses a brake shoe adapted to engage a wheel member, the brake shoe comprises a plurality of grooves intersecting with each other provided in the frictional surface of the brake shoe.

The plurality of grooves divide the body of the brake shoe into a plurality of almost independent sections. The intersection of the grooves and the division of the body of the brake shoe into a plurality of independent section reduce the mechanical strength of the brake shoe and may lead to breaking of the brake shoe due to mechanical stresses generated by the braking action.

It is an object of the present invention to remedy the drawbacks indicated above.

The object of the invention is achieved with a block for a brake for a railway stock according to claim 1.

Owing to the invention a significant improvement in the mechanical strength of the block for a brake is obtained together with an efficient disposal of the heat generated during braking is obtained, with a consequent reduction in the maximum temperature that is reached by the block and by the wheel in contact with the block during the braking. The grooves further facilitates conveying to the outside of powders produced during braking, thereby avoiding, or significantly reducing the risk that said powders may form lumps that may reduce braking efficiency and damage the periphery of the wheel.

The presence of the grooves further enables greater block elasticity to be obtained that determines better distribution of forces along the contact surface between block and wheel during braking.

Some modes of implementing the invention will be disclosed below merely by way of non-limiting example, with reference to the attached drawings, in which:
Figure 1 is an elevation view of a first embodiment of a block for a brake not forming part of the invention;
Figure 2 is a plan view of the block in Figure 1;
Figure 3 is an elevation view of a second embodiment of a
block for a brake not forming part of the invention ;
Figure 4 is a plan view of the block for a brake in Figure 3;
Figure 5 is an elevation view of a first embodiment of a block for a brake according to the invention;
Figure 6 is a plan view of the block for a brake in Figure 5;
Figure 7 is an elevation view of a second embodiment of a block for a brake according to the invention;
Figure 8 is a plan view of the block for a brake in Figure 7;
Figure 9 is an elevation view of a third embodiment of a block for a brake according to the invention;
Figure 10 is a plan view of the block for a brake in Figure 9;
Figure 11 is an elevation view of a fourth embodiment of a block for a brake according to the invention;
Figure 12 is a plan view of the block for a brake in Figure 11;
Figure 13 is an elevation view of a fifth embodiment of a block for a brake according to the invention;
Figure 14 is a plan view of the block for a brake in Figure 13;
Figure 15 is an elevation view of an sixth embodiment of a block for a brake according to the invention;
Figure 16 is a plan view of the block for a brake in Figure 15.

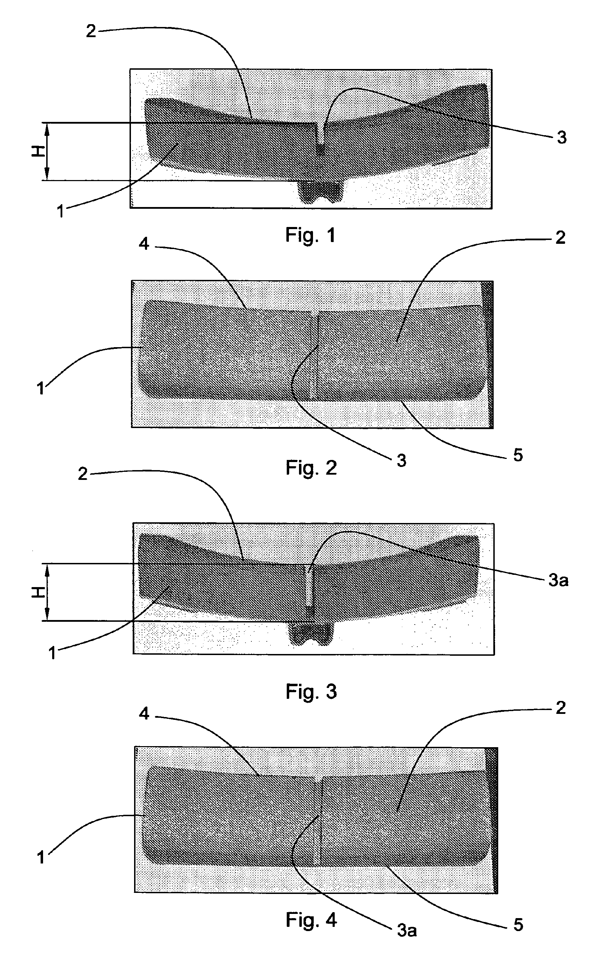

In Figures 1 and 2 there is illustrated a block for a brake, intended for being used on railway rolling stock, such as, for example, passenger railway carriages or goods wagons, or locomotives.

The block for a brake comprises a body 1 having an arched shape, a concave surface 2 of which is intended to interact with the peripheral surface of a wheel of said rolling stock.

The shape of said surface 2 is complementary to the shape of the peripheral surface of said wheel to ensure a secure contact between the block 1 and said wheel along the entire peripheral surface of the wheel.

On the surface 2 in a substantially central position, a groove 3 is made that leads onto opposite sides 4 and 5 of said surface 2 and has a depth that is equal to about half the height H of the block 1. The groove 3 is positioned in a direction that is substantially perpendicular to said opposite sides 4 and 5 and may have sharp or rounded corners with a connecting radius comprised between approximately 1 mm and approximately 6 mm.

In figures 3 and 4 there is illustrated a second embodiment of a block for brakes 1, in which on the surface 2, in a substantially central position, a groove 3a is made that leads onto the opposite sides 4 and 5 of said surface 2 and has a depth that is noticeably greater than half the height H of the block 1, but less than said height H. The groove 3a is positioned in a direction that is substantially perpendicular to said opposite sides 4 and 5.

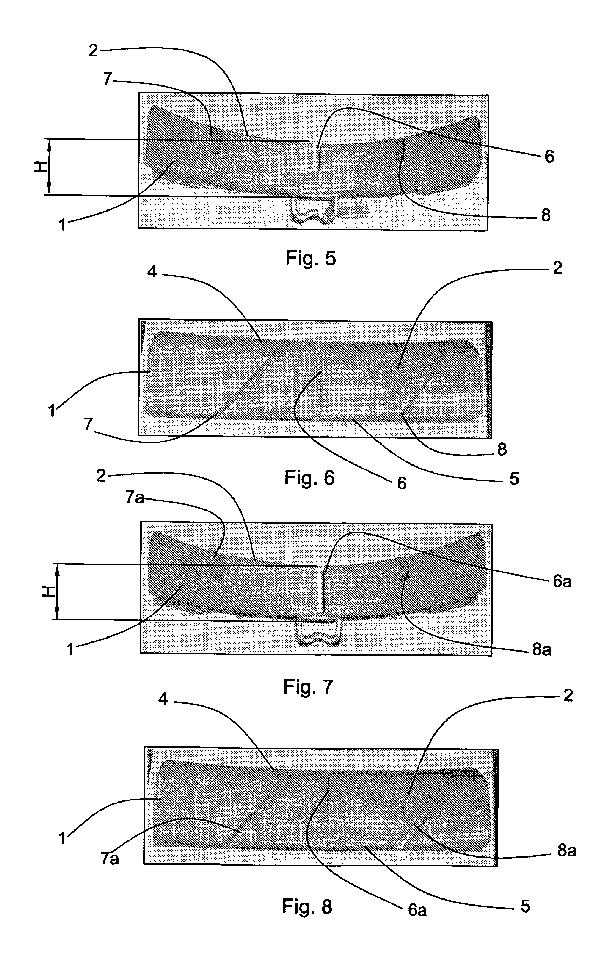

In figures 5 and 6 there is illustrated a first embodiment of a block for brakes 1 according to the invention, in which on the surface 2, in a substantially central position, a first groove 6 is made that leads onto the opposite sides 4 and 5 of said surface 2 and has a depth that is equal to about half the height H of the block 1. The groove 6 is positioned in a direction that is substantially perpendicular to said opposite sides 4 and 5. On said surface 2 a second groove 7 and a third groove 8 are further made that are arranged on opposite sides to a said first groove 6 and having a depth that is not greater than the depth of said first groove 6.

The second groove 7 and the third groove 8 are parallel to one another and are tilted with respect to said first groove 6 at an angle of tilt comprised between approximately 20° and approximately 40°. The second groove 7 and the third groove 8 lead onto a respective first end on a side 5 of said opposite sides 4 and 5 and are closed at a second respective end opposite said first end.

The first groove 6, the second groove 7 and the third groove 8 may have sharp corners or rounded corners with a connecting radius comprised between approximately 1 mm and approximately 6 mm.

In figures 7 and 8 there is illustrated a second embodiment of a block for brakes 1 according to the invention, in which on the surface 2 there is made, in a substantially central position, a first groove 6a that leads onto the opposite sides 4 and 5 of said surface 2 and has a depth that is noticeably greater than the half the height H of the block 1, but less than said height H. The groove 6a is positioned in a direction that is substantially perpendicular to said opposite sides 4 and 5. On said surface 2 a second groove 7a and a third groove 8a are further made that are arranged on sides opposite said first groove 6a and having a depth that is less than the depth of said first groove 6a.

The second groove 7a and the third groove 8a are parallel to one another and are tilted with respect to said first groove 6a at an angle of tilt comprised between approximately 20° and approximately 40°. The second groove 7a and the third groove 8a lead onto a first end on a side 5 of said opposite sides 4 and 5 and are closed at a second respective end opposite said first end.

The first groove 6a, the second groove 7a and the third groove 8a may have sharp corners or rounded corners with a connecting radius comprised between approximately 1 mm and approximately 6 mm.

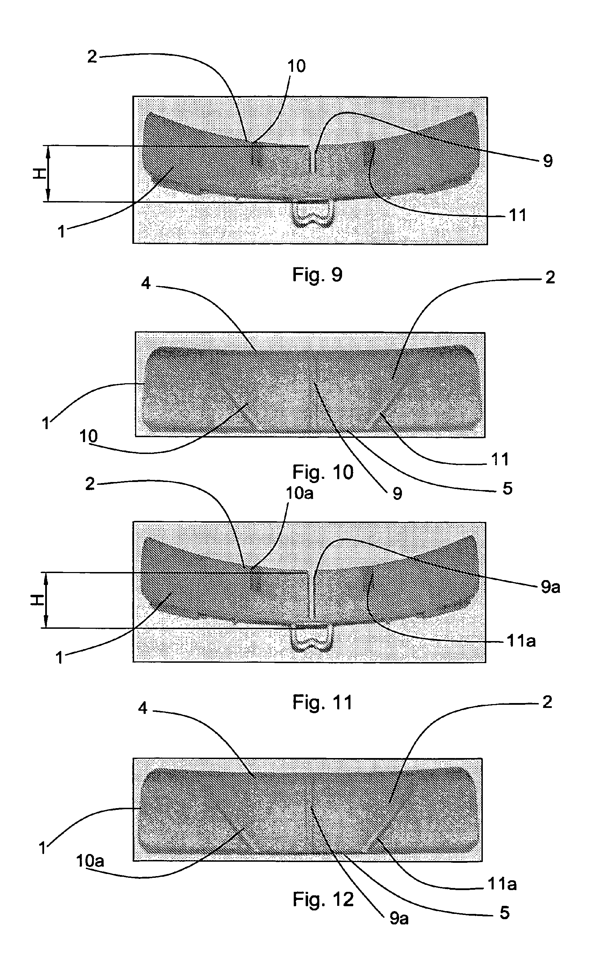

In figures 9 and 10 there is illustrated a third embodiment of a block for brakes 1 according to the invention, in which on the surface 2, in a substantially central position, a first groove 9 is made that leads onto the opposite sides 4 e 5 of said surface 2 and has a depth that is equal to about half the height H of the block 1. The groove 9 is positioned in a direction that is substantially perpendicular to said opposite sides 4 and 5. On said surface 2 a second groove 10 and a third groove 11 are further made that are arranged on sides that are opposite said first groove 9 and have a depth that is not greater than the depth of said first groove 9.

The second groove 10 and the third groove 11 are tilted with respect to said first groove 6 at opposite angles of tilt, comprised between approximately 20° and approximately 40°.

The second groove 10 and the third groove 11 lead onto a respective first end on a side 5 of said opposite sides 4 and 5 and are closed at a second respective end opposite said first end.

The first groove 9, the second groove 10 and the third groove 11 may have sharp corners or rounded corners with a connecting radius comprised between approximately 1 mm and approximately 6 mm.

In figures 11 and 12 there is illustrated a fourth embodiment of a block for brakes 1 according to the invention, in which on the surface 2, in a substantially central position, a first groove 9a is made that leads onto the opposite sides 4 and 5 of said surface 2 and has a depth that is noticeably greater than the half the height H of the block 1, but less than said height H. The groove 9a is positioned in a direction that is substantially perpendicular to said opposite sides 4 and 5. On said surface 2 a second groove 10a and a third groove 11a are further made that are arranged on sides opposite said first groove 9a and have a depth that is less than the depth of said first groove 9a.

The second groove 10a and the third groove 11a are tilted with respect to said first groove 9a at opposite angles of tilt, comprised between approximately 20° and approximately 40°. The second groove 10a and the third groove 11a lead onto a respective first end on a side 5 of said opposite sides 4 and 5 and are closed at a second respective end opposite said first end.

The first groove 9a, the second groove 10a and the third groove 11a may have sharp corners or rounded corners with a connecting radius comprised between approximately 1 mm and approximately 6 mm.

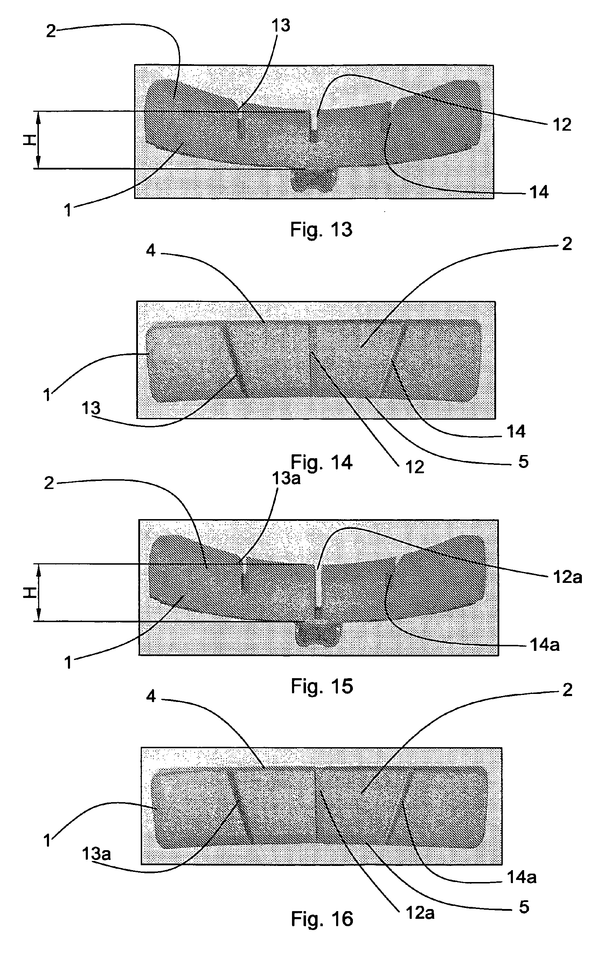

In figures 13 and 14 there is illustrated a fifth embodiment of a block for brakes 1 according to the invention, in which on the surface 2 in a substantially central position, a first groove 12 is made that leads onto the opposite sides 4 and 5 of said surface 2 and has a depth that is approximately half the height H of the block 1. The groove 12 is positioned in a direction that is substantially perpendicular to said opposite sides 4 and 5. On said surface 2 a second groove 13 and a third groove 14 are further made that are arranged on sides opposite said first groove 12 and have a depth that is not greater than the depth of said first groove 12. The second groove 13 and the third groove 14 also lead onto the opposite sides 4 and 5 of said surface 2.

The second groove 13 and the third groove 14 are tilted with respect to said first groove 12 at opposite angles of tilt, comprised between approximately 20° and approximately 40°. Alternatively, the second groove 13 and the third groove 14 can be parallel to one another and tilted with respect to the first groove 12 with a tilting angle comprised between approximately 20° and approximately 40°.

The first groove 12, the second groove 13 and the third groove 14 may have sharp corners or rounded corners with a connecting radius comprised between approximately 1 mm and approximately 6 mm.

In figures 15 and 16 there is illustrated an sixth embodiment of a block for brakes 1 according to the invention, in which on the surface 2, in a substantially central position, a first groove 12a is made that leads onto the opposite sides 4 and 5 of said surface 2 and has a depth that is noticeably greater than the half the height H of the block 1. The groove 12a is positioned in a direction that is substantially perpendicular to said opposite sides 4 and 5. On said surface 2 a second groove 13a and a third groove 14a are further made that are arranged on sides opposite said first groove 12a and have a depth that is less than the depth of said first groove 12a. The second groove 13a and the third groove 14a also lead onto the opposite sides 4 and 5 of said surface 2.

The second groove 13a and the third groove 14a are tilted with respect to said first groove 12a at opposite angles of tilt, comprised between approximately 20° and approximately 40°. Alternatively, the second groove 13a and the third groove 14a can be parallel to one another and tilted with respect to the first groove 12a with a tilting angle comprised between approximately 20° and approximately 40°. The first groove 12a, the second groove 13a and the third groove 14a may have sharp corners or rounded corners with a connecting radius comprised between approximately 1 mm and approximately 6 mm.

The depth of the grooves disclosed above can be comprised between approximately 20 mm and approximately 80 mm, with a width comprised between approximately 2 mm and approximately 12 mm and a depth comprised between approximately 20 mm and approximately 60 mm.

The grooves disclosed above enable the heat generated during breaking to be disposed of better, thus reducing the operating temperatures of the brakes, further enable any powders produced during braking to be conveyed to the outside of the block 1, thus avoiding corrosion phenomena and reducing the volatility of said powders, in addition to preventing the formation of lumps of said powders that are potentially harmful for the surface of the wheel that comes into contact with the block 1. Further, the aforesaid grooves improve the elasticity of the block 1, which enables phenomena of detachment or flaking of the material of the block 1 to be reduced considerably that tend to reduce the efficiency of the braking; lastly, the improved elasticity of the block 1 enables better distribution of the contact between block 1 and wheel to be obtained with a consequently more balanced distribution of the braking forces.

The blocks for brakes 1 according to the invention are preferably made of synthetic or organic material, with an average attrition coefficient that is variable between approximately 0.06 and approximately 0.31, depending on the type of block 1. For example, for K-type blocks for brakes the average attrition coefficient is comprised between approximately 0.18 and approximately 0.31, for L-type blocks for brakes the average attrition coefficient is comprised between approximately 0.11 and approximately 0.22 and for LL-type blocks for brakes the average attrition coefficient is comprised between approximately 0.06 and approximately 0.19.

The blocks 1 according to the invention are makable in the configurations prescribed by regulations for blocks for brakes for railway rolling stock, such as, for example the 1xBg 2xBg 1xBgu and 2xBgu configurations.

In the practical embodiment, the materials, the dimensions and the constructional details can be different from those indicated but be technically equivalent thereto, without thereby falling outside the scope of the present invention.

## Claims

1. Block (1) for brake for railway rolling stock comprising at least one groove (3; 3a; 6; 7; 8; 6a; 7a; 8a; 9; 10; 11; 9a; 10a; 11a; 12; 13; 14, 12a; 13a; 14a) made on a surface (2) of said block (1) intended for coming into contact with a peripheral surface of a wheel of said rolling stock, wherein said at least one groove (6; 7; 8; 6a; 7a; 8a; 9; 10; 11; 9a; 10a; 11a; 12; 13; 14; 12a; 13a; 14a) comprises a first groove (6; 6a; 9; 9a; 12; 12a), arranged in a substantially central position on said surface (2) and orientated in a substantially perpendicular direction to opposite sides (4; 5) of said surface (2), a second groove (7; 7a; 10; 10a; 13; 13a) and a third groove (8; 8a; 11; 11a; 14; 14a) arranged on opposite sides to said first groove (6; 6a), said second groove (7a; 10a; 13a) and said third groove (8a; 11a; 14a) having a depth that is not greater than the depth of said first groove (6a; 9a; 12a), wherein said second groove (7; 7a; 10; 10a; 13; 13a) and said third groove (8; 8a; 11; 11a; 14; 14a) are orientated in directions that are tilted with respect to said first groove; **characterized in that** said second groove (7; 7a; 10; 10a) and said third groove (8; 8a; 11; 11a) lead onto a respective first end on one of said opposite sides (4; 5) and are closed at a respective second end opposite said first end, or **in that** said second groove (13; 13a) and said third groove (14; 14a) lead at both ends onto said opposite sides (4; 5).

2. Block (1) for brakes according to claim 1, wherein said second groove (7a; 10a; 13a) and said third groove (8a; 11a; 14a) have a depth that is less than the depth of said first groove (6a; 9a; 12a).

3. Block (1) for brakes according to any preceding claim, wherein said second groove (7; 7a) and said third groove (8; 8a) are parallel to one another and are tilted with respect to said first groove (6; 6a), at an angle of tilt comprised between approximately 20° and approximately 40°.

4. Block (1) for brakes according to claim 3, wherein said second groove (10; 10a; 13; 13a) and said third groove (11; 11a; 14; 14a) are tilted with respect to said first groove (9; 9a; 12; 12a), at opposite angles comprised between approximately 20° and approximately 40°.

5. Block (1) for brake according to any preceding claim, wherein said first groove (3; 3a; 6; 6a; 9; 9a; 12; 12a) leads at both ends onto said opposite sides (4; 5).

6. Block (1) for brake according to any preceding claim, wherein said first groove (3; 6; 9; 12) has a depth equal to approximately half the height (H) of said block (1).

7. Block (1) for brake according to any one of claims 1 to 6, wherein said first groove (3a; 6a; 9a; 12a) has a depth that is noticeably greater than half of a height (H) of said block (1), but less than said height (H).

8. Block (1) for brakes according to claim 6, or 7, wherein said height is comprised between approximately 20 mm and approximately 60 mm.

9. Block (1) for brakes according to any preceding claim, wherein said first groove (3; 3a; 6; 6a; 9; 9a; 12; 12a), said second groove (7; 7a; 10; 10a; 13; 13a) and said third groove (8; 8a; 11; 11a; 14; 14a) have a width comprised between approximately 2 mm and approximately 12 mm.

10. Block (1) for brakes according to any preceding claim, wherein said first groove (3; 3a; 6; 6a; 9; 9a; 12; 12a), said second groove (7; 7a; 10; 10a; 13; 13a) and said third groove (8; 8a; 11; 11a; 14; 14a) have a length comprised between approximately 20 mm and approximately 80 mm.

## Patentansprüche

1. Klotz (1) für eine Bremse für ein Schienenfahrzeug, umfassend zumindest eine Nut (3; 3a; 6; 7; 8; 6a; 7a; 8a; 9; 10; 11; 9a; 10a; 11a; 12; 13; 14, 12a; 13a; 14a), ausgebildet an einer Fläche (2) des Klotzes (1), vorgesehen zum in Kontakt kommen mit einer peripheren Fläche eines Rads des Fahrzeugs, wobei die zumindest eine Nut (6; 7; 8; 6a; 7a; 8a; 9; 10; 11; 9a; 10a; 11a; 12; 13; 14; 12a; 13a; 14a) eine erste Nut (6; 6a; 9; 9a; 12; 12a) umfasst, angeordnet in einer im Wesentlichen zentralen Position an der Fläche (2) und orientiert in einer im Wesentlichen senkrechten Richtung zu gegenüberstehenden Seiten (4; 5) der Fläche (2), eine zweite Nut (7; 7a; 10; 10a; 13; 13a) und eine dritte Nut (8; 8a; 11; 11a; 14; 14a), angeordnet an entgegengesetzten Seiten zu der ersten Nut (6; 6a), wobei die zweite Nut (7a; 10a; 13a) und die dritte Nut (8a; 11a; 14a) eine Tiefe aufweisen, die nicht größer ist als die Tiefe der ersten Nut (6a; 9a; 12a), wobei die zweite Nut (7; 7a; 10; 10a; 13; 13a) und die dritte Nut (8; 8a; 11; 11a; 14; 14a) orientiert sind in Richtungen, die geneigt sind in Bezug auf die erste Nut; **dadurch gekennzeichnet, dass** die zweite Nut (7; 7a; 10; 10a) und die dritte Nut (8; 8a; 11; 11a) auf ein jeweiliges erstes Ende an einer der gegenüberstehenden Seiten (4; 5) führen und geschlossen sind an einem jeweiligen zweiten Ende, gegenüberstehend dem ersten Ende, oder dadurch, dass die zweite Nut (13; 13a) und die dritte Nut (14; 14a) an beiden Enden auf die gegenüberstehenden Seiten (4; 5) führen.

2. Klotz (1) für Bremsen gemäß Anspruch 1, wobei die zweite Nut (7a; 10a; 13a) und die dritte Nut (8a; 11a; 14a) eine Tiefe aufweisen, die kleiner ist als die Tiefe der ersten Nut (6a; 9a; 12a).

3. Klotz (1) für Bremsen gemäß einem vorhergehenden Anspruch, wobei die zweite Nut (7; 7a) und die dritte Nut (8; 8a) parallel zueinander sind und geneigt sind in Bezug auf die erste Nut (6; 6a) mit einem Neigungswinkel zwischen ungefähr 20° und ungefähr 40°.

4. Klotz (1) für Bremsen gemäß Anspruch 3, wobei die zweite Nut (10; 10a; 13; 13a) und die dritte Nut (11; 11a; 14; 14a) geneigt sind in Bezug auf die erste Nut (9; 9a; 12; 12a) mit entgegengesetzten Winkeln zwischen ungefähr 20° und ungefähr 40°.

5. Klotz (1) für eine Bremse gemäß einem vorhergehenden Anspruch, wobei die erste Nut (3; 3a; 6; 6a; 9; 9a; 12; 12a) an beiden Enden auf die gegenüberstehenden Seiten (4; 5) führt.

6. Klotz (1) für eine Bremse gemäß einem vorhergehenden Anspruch, wobei die erste Nut (3; 6; 9; 12) eine Tiefe aufweist, die ungefähr gleich der Hälfte der Höhe (H) des Klotzes (1) ist.

7. Klotz (1) für eine Bremse gemäß einem der Ansprüche 1 bis 6, wobei die erste Nut (3a; 6a; 9a; 12a) eine Tiefe aufweist, die merklich größer ist als die Hälfte einer Höhe (H) des Klotzes (1), aber kleiner als die Höhe (H).

8. Klotz (1) für Bremsen gemäß Anspruch 6 oder 7, wobei die Höhe zwischen ungefähr 20 mm und ungefähr 60 mm liegt.

9. Klotz (1) für Bremsen gemäß einem vorhergehenden Anspruch, wobei die erste Nut (3; 3a; 6; 6a; 9; 9a; 12; 12a), die zweite Nut (7; 7a; 10; 10a; 13; 13a) und die dritte Nut (8; 8a; 11; 11a; 14; 14a) eine Breite aufweisen zwischen ungefähr 2 mm und ungefähr 12 mm.

10. Klotz (1) für Bremsen gemäß einem vorhergehenden Anspruch, wobei die erste Nut (3; 3a; 6; 6a; 9; 9a; 12; 12a), die zweite Nut (7; 7a; 10; 10; 13; 13a) und die dritte Nut (8; 8a; 11; 11a; 14; 14a) eine Länge aufweisen zwischen ungefähr 20 mm und ungefähr 80 mm.

## Revendications

1. Sabot (1) pour frein pour matériel roulant ferroviaire, comprenant au moins une rainure (3 ; 3a ; 6 ; 7 ; 8 ; 6a ; 7a ; 8a ; 9 ; 10 ; 11 ; 9a ; 10a ; 11 a ; 12 ; 13 ; 14, 12a ; 13a ; 14a) réalisée sur une surface (2) dudit sabot (1) destinée à venir en contact avec une surface périphérique d'une roue dudit matériel roulant, dans lequel ladite rainure au nombre d'au moins une (6; 7; 8; 6a; 7a; 8a; 9; 10; 11 ; 9a; 10a; 11a; 12; 13; 14; 12a; 13a ; 14a) comprend une première rainure (6 ; 6a ; 9 ; 9a ; 12 ; 12a), disposée dans une position sensiblement centrale sur ladite surface (2) et orientée dans une direction sensiblement perpendiculaire à des côtés opposés (4 ; 5) de ladite surface (2), une deuxième rainure (7 ; 7a ; 10 ; 10a ; 13 ; 13a) et une troisième rainure (8 ; 8a ; 11 ; 11a ; 14 ; 14a) disposées sur des côtés opposés de ladite première rainure (6 ; 6a), ladite deuxième rainure (7a ; 10a ; 13a) et ladite troisième rainure (8a ; 11a ; 14a) ayant une profondeur qui n'est pas supérieure à la profondeur de ladite première rainure (6a ; 9a ; 12a), dans lequel ladite deuxième rainure (7 ; 7a ; 10 ; 10a ; 13 ; 13a) et ladite troisième rainure (8 ; 8a ; 11 ; 11a ; 14 ; 14a) sont orientées dans des directions qui sont inclinées par rapport à ladite première rainure ; **caractérisé en ce que** ladite deuxième rainure (7 ; 7a ; 10 ; 10a) et ladite troisième rainure (8 ; 8a ; 11 ; 11 a) mènent sur une première extrémité respective sur l'un desdits côtés opposés (4 ; 5) et sont fermées à une deuxième extrémité respective opposée à ladite première extrémité, ou **en ce que** ladite deuxième rainure (13 ; 13a) et ladite troisième rainure (14 ; 14a) mènent aux deux extrémités sur lesdits côtés opposés (4 ; 5).

2. Sabot (1) pour freins selon la revendication 1, dans lequel ladite deuxième rainure (7a ; 10a ; 13a) et ladite troisième rainure (8a ; 11a ; 14a) ont une profondeur qui est inférieure à la profondeur de ladite première rainure (6a ; 9a ; 12a).

3. Sabot (1) pour freins selon l'une quelconque des revendications précédentes, dans lequel ladite deuxième rainure (7 ; 7a) et ladite troisième rainure (8 ; 8a) sont parallèles entre elles et sont inclinées par rapport à ladite première rainure (6 ; 6a), d'un angle d'inclinaison compris entre approximativement 20° et approximativement 40°.

4. Sabot (1) pour freins selon la revendication 3, dans lequel ladite deuxième rainure (10 ; 10a ; 13 ; 13a) et ladite troisième rainure (11 ; 11a ; 14 ; 14a) sont inclinées par rapport à ladite première rainure (9 ; 9a ; 12 ; 12a), d'angles opposés compris entre approximativement 20° et approximativement 40°.

5. Sabot (1) pour frein selon l'une quelconque des revendications précédentes, dans lequel ladite première rainure (3 ; 3a ; 6 ; 6a ; 9 ; 9a ; 12 ; 12a) mène aux deux extrémités sur lesdits côtés opposés (4 ; 5).

6. Sabot (1) pour frein selon l'une quelconque des revendications précédentes, dans lequel ladite première rainure (3 ; 6 ; 9 ; 12) a une profondeur égale à approximativement la moitié de la hauteur (H) dudit sabot (1).

7. Sabot (1) pour frein selon l'une quelconque des revendications 1 à 6, dans lequel ladite première rainure (3a ; 6a ; 9a ; 12a) a une profondeur qui est considérablement supérieure à la moitié d'une hauteur (H) dudit sabot (1), mais inférieure à ladite hauteur (H).

8. Sabot (1) pour freins selon la revendication 6 ou 7, dans lequel ladite hauteur est comprise entre approximativement 20 mm et approximativement 60 mm.

9. Sabot (1) pour freins selon l'une quelconque des revendications précédentes, dans lequel ladite première rainure (3 ; 3a ; 6 ; 6a ; 9 ; 9a ; 12 ; 12a), ladite deuxième rainure (7 ; 7a ; 10 ; 10a ; 13 ; 13a) et ladite troisième rainure (8 ; 8a ; 11 ; 11 a ; 14 ; 14a) ont une largeur comprise entre approximativement 2 mm et approximativement 12 mm.

10. Sabot (1) pour freins selon l'une quelconque des revendications précédentes, dans lequel ladite première rainure (3 ; 3a ; 6 ; 6a ; 9 ; 9a ; 12 ; 12a), ladite deuxième rainure (7 ; 7a ; 10 ; 10a ; 13 ; 13a) et ladite troisième rainure (8 ; 8a ; 11 ; 11a ; 14 ; 14a) ont une longueur comprise entre approximativement 20 mm et approximativement 80 mm.
